(19) **Europäisches Patentamt**

**European Patent Office**

**Office européen des brevets**

(11) Veröffentlichungsnummer : **0 051 793 B1**

(12) **EUROPÄISCHE PATENTSCHRIFT**

(45) Veröffentlichungstag der Patentschrift :
25.07.84

(51) Int. Cl.³ : **B 41 F 13/08**, F 16 C 13/02

(21) Anmeldenummer : **81108997.8**

(22) Anmeldetag : **27.10.81**

(54) **Zylinder.**

(30) Priorität : **08.11.80 DE 3042170**

(43) Veröffentlichungstag der Anmeldung :
**19.05.82 Patentblatt 82/20**

(45) Bekanntmachung des Hinweises auf die Patenterteilung : **25.07.84 Patentblatt 84/30**

(84) Benannte Vertragsstaaten :
**CH DE FR GB LI SE**

(56) Entgegenhaltungen :
**DE-A- 2 024 221**
**DE-A- 2 853 901**
**DE-C- 800 932**
**GB-A- 2 034 639**

(73) Patentinhaber : **Albert-Frankenthal AG**
**Johann-Klein-Strasse 1 Postfach 247**
**D-6710 Frankenthal (DE)**

(72) Erfinder : **Laubscher, Hans Jörg, Dipl.-Ing.**
**Kalmitstrasse 9**
**D-6710 Frankenthal (DE)**
Erfinder : **Schwaab, Manfred**
**Raiffeisenstrasse 37 a**
**D-6700 Lu-Oggersheim (DE)**
Erfinder : **Trapp, Horst**
**Kasimirstrasse 19**
**D-6520 Worms (DE)**

(74) Vertreter : **Munk, Ludwig, Dipl.-Ing.**
**Prinzregentenstrasse 1**
**D-8900 Augsburg (DE)**

## Beschreibung

Die Erfindung betrifft einen Zylinder für eine mit mehreren aufeinander abrollenden Arbeitszylindern versehene Maschine, insbesondere einen Druckwerkszylinder für eine Druckmaschine, mit einem mittleren Ballen und seitlichen, in gehäuseseitige axiale Verschiebelager eingreifenden, mit dem Ballen · lösbar verbundenen Lagerzapfen, von denen vorzugsweise mindestens einer mit einem Antriebsrad versehen ist.

Die bekannten Zylinder dieser Art bestehen normalerweise aus einem Stück, jedenfalls soweit sie Einsatzzwecken dienen, bei denen es, wie z. B. bei einem Druckwerkszylinder für eine Druckmaschine, auf exakten Rundlauf und Schlagfreiheit ankommt. Der Ballen und die seitlichen Lagerzapfen bilden bei diesen bekannten Anordnungen eine nicht auflösbare Baueinheit, was sich jedoch erfahrungsgemäß negativ auf die Montage- und Reparaturfreundlichkeit auswirkt, da jeweils der komplette Zylinder samt Ballen und Lagerzapfen ein- und ausgebaut werden muß. Im Falle eines nachträglichen Ausbaus des Zylinders müssen dabei zunächst die Antriebsräder abgenommen, die Lager demontiert und die diesen zugeordneten Lagerbüchsen ausgebaut werden. Anschließend kann dann der Zylinder so weit nach einer Seite verrückt werden, daß dabei einer der Lagerzapfen aus der zugeordneten Lagerbohrung herausgeführt werden kann. Anschließend wird der Zylinder in gekippter Stellung so weit zur anderen Seite gerückt. daß auch der andere Lagerzapfen aus der zugeordneten Lagerbohrung herausgeführt wird. Dies erweist sich als umständlich und zeitaufwendig. Infolge des geschilderten Ein- bzw. Ausfädelns des jeweils auszubauenden Zylinders ist es hierbei erforderlich, auch die jeweils über diesem sich befindenden Zylinder auszubauen, so daß sich eine Vervielfachung des zeitlichen und personellen Aufwands ergibt. In diesem Zusammenhang ist vor allem zu berücksichtigen, daß bei Druckmaschinen etwa infolge des Schmitzringverschleißes oder infolge von Ätzschäden am Ballenumfang ein häufiger Zylinderausbau erforderlich ist. Der dabei jedesmal in Kauf zu nehmende hohe Montageaufwand führt jedoch zu verhältnismäßig hohen Maschinenstillstandszeiten, was sich negativ auf die Gesamtwirtschaftlichkeit auswirkt. Das geschilderte Ein- und Ausfädeln des jeweils auszubauenden Zylinders ergibt gleichzeitig einen hohen Platzbedarf zwischen den Maschinenseitenwänden, da hierbei zwischen Ballenstirnseite und benachbarter Seitenwand so viel Platz benötigt wird, daß die Lagerzapfen durch seitliches Verschieben des Zylinders aus den zugeordneten Lagerbohrungen herausgefahren werden können. Dies führt ersichtlich zu einer verhältnismäßig großen Länge der Lagerzapfen, was sich negativ auf die erreichbare Stabilität auswirkt und gleichzeitig einen Verlust an Arbeitsbreite bedeutet. Die Ausbaubarkeit der den gehäuseseitigen Lagern zugeordneten Lagerbuchsen ist hierbei nur dann gewährleistet, wenn die Flansche dieser Lagerbuchsen außen, d. h. im Bereich der Antriebsräder, liegen und daher sehr schwer zugänglich sind. Im Falle von Exzenterbuchsen, die zum Einstellen der Anpreßkraft zwischen zwei aufeinander abrollenden Zylindern verdreht werden, wirkt sich diese schlechte Zugänglichkeit der Buchsenflansche negativ auf die Bedienungsfreundlichkeit aus. Ein weiterer Nachteil der bekannten Anordnungen ist darin zu sehen, daß bei einer Beschädigung des Ballens der komplette Zylinder samt Lagerzapfen ersetzt werden muß, was neben dem hohen Montageaufwand auch einen hohen Materialaufwand bedeutet.

Viele Zylinder, wie beispielsweise Gummi- und Plattenzylinder von Rotations-Druckmaschinen sind mit einer von der Seite her zu bohrenden Grube zur Aufnahme von Platten- und Gummituchspannvorrichtungen versehen. Das Vorhandensein langer seitlicher Zapfen erschwert jedoch nicht nur den Bohrvorgang, weil wegen der vorhandenen Lagerzapfen lange Bohrstangen verwendet werden müssen, sondern schränkt auch die konstruktiven Möglichkeiten ein, weil stets ein Kompromiß zwischen den einander widerstrebenden Forderungen gefunden werden muß, einerseits dicke, tragfähige Lagerzapfen und andererseits eine große Grube, die Platz für eine verwindungssteife Spannspindel bietet, vorzusehen. Ein weiterer ganz besonderer Nachteil der bekannten einteiligen Konstruktionen ist darin zu sehen, daß hierbei der Ballen und die seitlichen Lagerzapfen aus demselben Material hergestellt werden müssen, was ebenfalls die konstruktiven Möglichkeiten einschränkt, weil z. B. rostfreies Material, das im Bereich des Ballens benötigt wird, eine verhältnismäßig geringe Tragfähigkeit aufweist, was im Bereich der Lagerzapfen wiederum unerwünscht ist.

Es sind zwar auch schon mehrteilige Zylinder bekannt, die im Bereich zwischen Ballen und Lagerzapfen unterteilt sind. Diese bekannten Zylinder werden jedoch erst im zusammengebauten Zustand fertigbearbeitet, was dann zu einer quasieinteiligen Anordnung führt. Ein nachträglicher Auseinander- bzw. Zusammenbau ist hierbei nicht möglich. Die oben geschilderten Nachteile hinsichtlich der Montage- und Reparaturfreundlichkeit sind daher auch hier vorhanden. Dasselbe gilt für den enormen Platzbedarf zwischen den Seitenwänden und die schlechte Bedienbarkeit eventuell vorgesehener Exzenterbuchsen.

Aus der DE-C 800 932 ist ein Zylinder für einen Prägekalander bekannt, bei dem der Zylinderballen lösbar zentriert auf seitlichen Lagerzapfen aufnehmbar und somit ohne Demontage der Lagerzapfen ausbaubar ist. Hierzu ist der Zylinderballen im Bereich seiner Stirnseiten mit konischen Zentrieransätzen versehen, die zum Eingriff mit im Bereich der Lagerzapfen vorgesehenen, mit konischen Ausnehmungen versehenen, mit konischen Ausnehmungen versehenen Kupplungskörpern bringbar sind. Eine gegenseitige Anlage zwischen Ballen und Lagerzapfen besteht hierbei ausschließlich im Bereich der konischen Zentrierkupplung. Anordnungen dieser Art sind jedoch nicht nur vergleichsweise aufwendig, sondern gewährleisten für viele Einsatzzwecke auch die gewünschte Genauigkeit. In diesem Zusammenhang ist nämlich davon auszugehen, daß die bei der bekannten Anordnung zur Anwendung kommenden konischen Sitze bei vorgegebener Genauigkeit einen verhältnismäßig hohen Herstellungsaufwand erfordern, da hierbei nicht nur der Durchmesser, sondern auch der Winkel stimmen muß. Bereits kleinste Fehler in der Winkligkeit des Konus wirken sich verstärkt durch die Hebelgesetze als Schlag der Walze aus. Da die Lagerzapfen und der Zylinderballen bei der bekannten Anordnung keine gegenseitige Anlage im Bereich planparalleler Anlageflächen aufweisen, ist es auch sehr schwierig, die Achsen der Lagerzapfen und des Ballens zum Fluchten zu bringen. Ganz abgesehen davon werden bei der bekannten Anordnung die Kräfte, welche die Lagerzapfen und den Zylinderballen zusammenhalten, über das Maschinengestell geleitet. Schwingungen der Maschinenwände und der Lager, mit denen unter Produktionsbedingungen immer zu rechnen ist, können daher die Verbindung lockern und den Ballen schief stellen. Die vorstehenden Betrachtungen lassen bereits erkennen, daß eine Anordnung der bekannten Art dort nicht brauchbar ist, wo hohe Genauigkeiten hinsichtlich des Rundlaufs eingehalten werden müssen, wie dies z. B. bei einer Druckwerkswalze der Fall ist. Beim Auftreten eines sogenannten Wicklers ist bei der bekannten Anordnung infolge der mangelnden direkten Verbindung zwischen Lagerzapfen und Ballen mit einer Zerstörung der konischen Sitze zu rechnen. Die Folge davon ist, daß sowohl die Wellenzapfen als auch der Ballen unbrauchbar werden und ersetzt werden müssen, was sich negativ auf die Wirtschaftlichkeit auswirkt.

Hiervon ausgehend ist es daher die Aufgabe der vorliegenden Erfindung, mit einfachen und daher kostengünstigen Mitteln einen Zylinder eingangs erwähnter Art zu schaffen, bei welchem der Ballen ohne Demontage der seitlichen Lagerzapfen schnell und einfach austauschbar ist, bei dem der hierfür erforderliche Aufwand aber vergleichsweise gering bleibt und bei dem dennoch eine hohe Genauigkeit gewährleistet ist.

Diese Aufgabe wird erfindungsgemäß dadurch gelöst, daß die Lagerzapfen mit einem dem Ballen jeweils zugewandten Flansch der an einer jeweils zugeordneten planparallelen Gegenfläche des Ballens zur Anlage bringbar ist, mit dem Ballen lösbar verschraubbar sind, der im Bereich seiner den Lagerzapfen zugewandten Stirnseiten mit jeweils einem kolbenartig ausgebildeten, eine gehärtete Passungsbüchse tragenden Zentrierkopf versehen ist, der mit strammem Schiebesitz zum Eingriff in eine ebenfalls mit einer gehärteten Passungsbüchse bestückte Zentrierbohrung des jeweils zugeordneten Lagerzapfens bringbar ist und in der Eingriffsstellung eine Druckkammer verschließt, die über einen nach außen geführten Kanal an eine Druckquelle anschließbar ist, und daß die den Lagerzapfen zugeordneten Verschiebelager jeweils einen zumindest der axialen Länge des Zentrierkopfes entsprechenden Verschiebeweg aufweisen.

Die direkte Anlage der Lagerzapfenflansche an den benachbarten, planparallelen Ballenstirnseiten ermöglicht auf einfache Weise die Einhaltung einer exakten Parallelität und damit einer hohen Winkelgenauigkeit. Die exakte Zentrierung von Ballen und Lagerzapfen wird getrennt davon durch die zylindrischen Sitze im Bereich der Zentrierköpfe erreicht. In diesem Zusammenhang ist davon auszugehen, daß ein zylindrischer Sitz bei vergleichbarem Aufwand wesentlich genauer hergestellt werden kann, als ein konischer Sitz. Dadurch, daß die Lagerzapfen direkt an den Ballen angeflanscht sind, gehen keine Axialkräfte über die Seitenwandungen und die Lager, so daß Schwingungen im Bereich der Seitenwandungen und der Lager ohne Einfluß auf die Exaktheit der Verbindung zwischen Ballen und Lagerzapfen bleiben. Gleichzeitig ist hierdurch sichergestellt, daß im Falle eines Wicklers die im Bereich der Zentrierköpfe vorgesehenen zylindrischen Sitze geschützt sind, so daß auch bei einem starken Wickler eine Beschädigung des Zylinderballens unterbleibt. Der stramme Sitz der Zentrierköpfe unterstützt nicht nur die Schraubverbindung, sondern wirkt sich auch vorteilhaft auf die erzielbare Genauigkeit und den hierfür erforderlichen Aufwand aus, da eine Art Schrumpfverbindung dieser Art bei vorgegebener Genauigkeit wesentlich größere Toleranzen zuläßt als etwa eine Konusverbindung. Dennoch können durch Druckbeaufschlagung der Druckkammern die Lagerzapfen einfach seitlich weggeschoben werden, wodurch der Ballen ohne vorherige Demontage der Lagerzapfen zur Entnahme freigegeben wird. Die gehärteten Passungsbüchsen besitzen in vorteilhafter Weise eine hohe Formtreue auch im Mikrobereich und stellen daher sicher, daß die gewünschten Rundlaufeigenschaften auch nach erfolgtem Aus- und Wiedereinbau eines Ballens, etwa im Falle einer Ballenreparatur oder einer Ballenerneuerung, erhalten bleiben. Erst hierdurch kommen daher die Vorteile besonders zum Tragen, die durch die separate Entnehmbarkeit des Ballens ohne aufwendigen Aus- und Wiedereinbau der Lagerzapfen samt der zugehörigen Lagerbüchsen und Antriebsräder gegeben sind. Da die Lagerzapfen und dementsprechend auch die diesen zugeordneten Lagerbüchsen hierbei in vorteilhafter Weise auch beim Ballenwechsel nicht ausgebaut werden müssen, können die Lagerbüchsen mit innenliegenden Flanschen versehen sein, was eine ausgezeichnete Zugänglichkeit und damit im Falle von Exzenterlagerbüchsen eine einfache Verstellbarkeit gewährleistet. Ein weiterer Vorteil der erfindungsgemäßen Maßnahmen ist darin zu sehen, daß zwischen den Maschinenseitenwänden und den Ballenstirnseiten vergleichsweise wenig Raum benötigt wird, was eine hohe Stabilität und einen vergleichsweise geringen Wandabstand bzw. eine vergleichsweise große Arbeitsbreite ermöglicht.

Die erfindungsgemäßen Maßnahmen stellen ferner sicher, daß im Falle einer Unbrauchbarkeit eines beschädigten Ballens lediglich der Ballen zu ersetzen ist und die Lagerzapfen erhalten bleiben, was sich auch positiv auf den Materialbedarf auswirkt. Ferner ermöglichen die erfindungsgemäßen Maßnahmen eine individuelle Materialauswahl für den Ballen und die Zapfen und ermöglichen gleichzeitig eine einfache Bearbeitung des Ballens von seinen Stirnseiten her. Außerdem ist in vorteilhafter Weise sichergestellt, daß hierbei die Zapfendicke nicht von der notwendigen Bearbeitbarkeit des Ballens abhängig ist. Die erfindungsgemäßen Maßnahmen gewährleisten dementsprechend auch eine hohe konstruktive Freizügigkeit. Andererseits bleibt jedoch der durch die erfindungsgemäßen Maßnahmen verursachte Aufwand überraschend gering. Die mit der Erfindung erzielbaren Vorteile sind daher insbesondere in einer ausgezeichneten Wirtschaftlichkeit zu sehen.

Die DE-A 20 24 221 zeigt einen ein- und ausbaubaren Tiefdruckformzylinder mit einem mittleren Ballen und hieran angeformten, seitlichen Zapfen, die in gestellseitige Lager eingreifen. Diese Lager bestehen aus mehreren, ineinander angeordneten Teilen, nämlich jeweils einer den zugeordneten Zapfen aufnehmenden Hülse, deren Außenumfang konisch ausgebildet ist und in eine konische Bohrung einer sie umfassenden Büchse eingreift, die ihrerseits durch Wälzlager an einem äußeren Lagergehäuse abgestützt ist, das in eine zugeordnete Bohrung der zugeordneten Maschinenseitenwand eingesetzt ist. Zum Ein- und Ausbau des Zylinders werden die äußeren Lagergehäuse samt der hiervon umfaßten Lagerteile in axialer Richtung verschoben. Beim Zylindereinbau werden die Lagergehäuse dabei so weit verschoben, daß die hieran jeweils abgestützte Büchse im Einbauzustand mit ihrer Stirnseite am zugeordneten Zylinderballen anliegt. Dies kann sich zwar positiv auf die erzielbare Parallelität und Winkelgenauigkeit auswirken. Die Lagerkräfte gehen bei der bekannten Anordnung gemäß DE-A 20 24 221 jedoch ausschließlich über die seitlich an den Zylinderballen angeformten Zapfen. Diese müssen daher hinsichtlich Länge und Durchmesser auch so dimensioniert sein, daß diese Kräfte aufgenommen werden können. Bei der Anordnung gemäß DE-A 20 24 221 sind den seitlich an den Zylinderballen angeformten Zapfen zwar gehäuseseitige Einrollschlitze zugeordnet. Sofern derartige Einrollschlitze jedoch nicht vorgesehen wären, wäre es erforderlich, den Zylinder samt der seitlich angeformten Zapfen in der eingangs beschriebenen Weise ein- und auszufädeln. Außerdem besteht bei der Anordnung gemäß DE-A 20 24 221 die Gefahr, daß im Falle eines sogenannten Wicklers nicht nur die die Zapfen umfassenden Büchsen, sondern auch die die Lagerkräfte übertragenden seitlichen Zapfen selbst verbogen werden, wodurch der gesamte Zylinder unbrauchbar werden kann. Ein weiterer Nachteil der Anordnung gemäß DE-A 20 24 221 ist darin zu sehen, daß infolge der einteiligen Ausbildung des Zylinderballens und der seitlichen Zapfen die Materialwahl einen Kompromiß zwischen Korrosionsfestigkeit und Tragfähigkeit erfordert.

Die jeweils einen seitlichen Zapfen aufnehmenden Hülsen sind zwar zum Zwecke des Zylinderein- und -ausbaus mittels eines einen in der jeweils zugeordneten Büchse angeordneten Druckraum verschließenden Kolbens entgegen der Kraft einer Rückstellfeder verschiebbar. Diese Verschiebebewegung gibt jedoch den jeweils zugeordneten Zapfen des Zylinderballens nicht frei, sondern führt lediglich zu einem radialen Spiel zwischen Hülse und jeweils zugeordneter Büchse. Zur Freigabe des seitlichen Zapfens muß hierbei das äußere Lagergehäuse samt sämtlichen hiervon umfaßten Lagerteilen seitlich verschoben werden. Ganz abgesehen davon erfordert der konische Sitz zwischen Hülse und jeweils zugeordneter Büchse einen hohen Herstellungsaufwand. Außerdem ist hierbei zur Gewährleistung einer kraftschlüssigen Verbindung zwischen Hülse und zugeordnetem Zapfen eine Zusammenpreßbarkeit der Hülse in radialer Richtung erforderlich, was sich ungünstig auf die erzielbare Rundlaufgenauigkeit auswirken kann.

Im Falle von Schmitzringen sind diese bei den bekannten Anordnungen normalerweise seitlich aufgeschraubt. Diese seitlich aufgeschraubten Schmitzringe sind dabei nicht nur im Bereich zwischen den Schrauben instabil, sondern würden bei einem Austausch des Ballens auch Fehler hinsichtlich der Planheit der Ballenstirnseiten befürchten lassen. Im Falle von Schmitzringen sind diese daher zweckmäßig als auf den stirnseitigen Umfangsbereich des Ballens aufgezogene Lagerringe ausgebildet. Der einfache Ballenein- und -ausbau ermöglicht hierbei in vorteilkafter Weise die Durchführung von Kontrollmessungen im Bereich der Schmitzringe und falls erforderlich, einen einfachen Schmitzringtausch. Gerade der Verschleiß der Schmitzringe ist ja heute häufig der Grund für den Zylinderausbau. Gleichzeitig ermöglichen die vorstehend genannten Maßnahmen die Verwendung einfacher Serienbauteile in Form von Lagerringen zur Bildung der Schmitzringe, was sich höchst positiv auf die Wirtschaftlichkeit auswirkt. Eine Beeinflussung der Planheit der Ballenstirnseiten ist hierbei in vorteilhafter Weise nicht zu befürchten.

Eine weitere vorteilhafte Maßnahme kann darin bestehen, daß den Lagerzapfen vorzugsweise als den unteren Umfangsbereich ihres Flansches jeweils umgreifende Schalen ausgebildete, am Maschinengehäuse festlegbare Auflager zugeordnet sind. Diese ermöglichen in vorteilhafter Weise eine Sicherung der vom Ballen gelösten Lagerschalen gegen Verkanten, was sich vorteilhaft auf die Lebensdauer der Lager auswirkt.

In weiterer Fortbildung der übergeordneten Maßnahmen kann der Ballen mittels eines am Maschinengehäuse festlegbaren Distanzblocks gegen seitliches Verschieben blockierbar sein. Hierdurch ist sichergestellt, daß bei einer Druckbeaufschlagung einer der Druckkammern nicht der Ballen, sondern der jeweils zugeordnete Lagerzapfen verschoben wird. Zweckmäßig kann als Auflager und Distanzblock ein und dasselbe Bauteil Verwendung finden.

Eine andere Fortbildung der übergeordneten Maßnahmen besteht darin, daß dem Ballen am Maschinengehäuse lösbar festlegbare Ausrollschienen zugeordnet sind. Diese erleichtern das Abnehmen bzw. Einlegen des Ballens.

Zweckmäßig kann als Druckquelle eine vorzugsweise von Hand betätigbare Hydraulikpumpe Verwendung finden. Ein derartiges Aggregat ist leicht transportierbar und bedienbar.

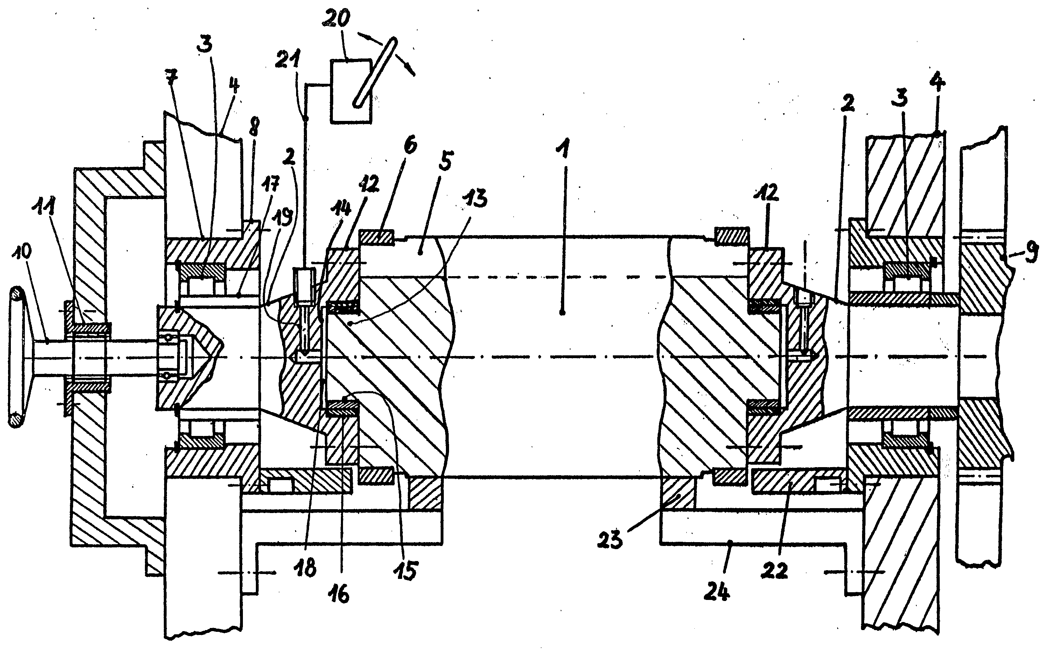

Weitere zweckmäßige Fortbildungen und vorteilhafte Ausgestaltungen der übergeordneten Maßnahmen ergeben sich aus der nachstehenden Beschreibung eines Ausführungsbeispiels anhand der Zeichnung in Verbindung mit den restlichen Unteransprüchen.

Die Zeichnung zeigt einen Plattenzylinder für eine Rotations-Druckmaschine in teilweise geschnittener Darstellung.

Der in der Zeichnung dargestellte Plattenzylinder besteht aus einem im Betrieb die Druckplatten aufnehmenden Zylinderballen 1, der austauschbar auf zwei seitlichen als Ganzes mit 2 bezeichneten Lagerzapfen aufgenommen ist, welche durch zugeordnete Rollenlager 3 in den Maschinenseitenwänden 4 gelagert sind. Der Zylinderballen 1 besteht aus rostfreiem Material, um eine gute Säurebeständigkeit zu bewerkstelligen. Die Lagerzapfen 2, deren Durchmesser gegenüber dem Ballendurchmesser zurückgenommen ist, bestehen aus einem gegenüber rostfreiem Material eine höhere Tragfähigkeit aufweisenden Material. Am Umfang des Zylinderballens 1 sind eine oder zwei Gruben 5 vorgesehen, in welchen die Enden der aufzuspannenden Druckplatten befestigbar sind. Die den Druckplatten zugeordnete Arbeitsbreite wird durch Schmitzringe 6 begrenzt, die im Betrieb auf den Schmitzringen des Gegenzylinders, hier des Gummizylinders bzw. des Druckzylinders, laufen. Die Schmitzringe 6 sind hier einfach als auf den stirnseitigen Umfangsbereich des Zylinderballens 1 aufgezogene, serienmäßige Lagerringe ausgebildet. Dies ermöglicht eine direkte Anlage der Lagerzapfen 2 am Zylinderballen 1.

Die Rollenlager 5 sind in Exzenterbuchsen 7 eingesetzt, die mit innenliegendem Flansch 8 montiert sind. Die Exzenterbuchsen 7 sind zur Einstellung des Schmitzringdrucks verstellbar, was bei innenliegendem Flansch, der eine gute Zugänglichkeit gestattet, leicht und einfach zu bewerkstelligen ist. Der dargestellte Plattenzylinder wird über ein in einen Antriebsräderzug integriertes Zahnrad 9 angetrieben, das außerhalb der benachbarten Maschinenseitenwand auf das Ende eines Lagerzapfens 2 aufgesetzt ist. Das Seitenregister des Plattenzylinders ist einstellbar. Hierzu ist der dem Antriebsrad 9 gegenüberliegende Lagerzapfen 2 über eine Drehverbindung mit einer Stellspindel 10 gekoppelt, die in eine am Maschinengehäuse befestigte Gewindebüchse 11 eingreift. Die Seitenbewegung des Plattenzylinders wird durch die Rollenlager 3 aufgenommen.

Die Lagerzapfen 2 sind mit einem dem Zylinderballen 1 jeweils zugewandten Flansch 12 versehen, der direkt an eine planparallele Gegenfläche der zugewandten Ballenstirnseite angesetzt und hiermit verschraubt ist, was infolge der hier als auf den stirnseitigen Umfangsbereich des Ballens 1 aufgezogene Lagerringe ausgebildeten Schmitzringe 6 ohne weiteres möglich ist. Die direkte Anlage der Flansche 12 am Ballen 1 ermöglicht eine hohe wiederholbare Genauigkeit hinsichtlich der Planheit im Stoßbereich. Zur Bewerkstelligung der erforderlichen Zentrierung ist der Zylinderballen 1 im Bereich seiner Stirnseiten mit jeweils einem als abgesetzter, zentral angeordneter, zylindrischer Bund ausgebildeten, kolbenartigen Zentrierkopf 13 versehen, der in eine Zentrierbohrung 14 des jeweils zugeordneten Lagerzapfens 2 eingreift. Zur Bewerkstelligung einer wiederholbaren Genauigkeit der Zentrierpassung sind der Zentrierkopf 13 und die Zentrierbohrung 14 mit Passungsbüchsen 15 bzw. 16 aus gehärtetem Stahl versehen, die mit strammem Schiebesitz ineinanderschiebbar sind. Die Härte der Passungsbüchsen 15 bzw. 16 stellt sicher, daß Oberflächenveränderungen jeder Art unterbleiben. Die als Verschiebelager ausgebildeten Rollenlager 3 besitzen einen Verschiebeweg, der zumindest der axialen Länge des ballenseitigen Zentrierkopfes 13 entspricht. Im dargestellten Ausführungsbeispiel sind hierzu die inneren, rollenführungsfreien Lagerringe 17 gegenüber den die Rollenführung aufweisenden äußeren Lagerringen zumindest um die Höhe des Zentrierkopfes 13 gegenläufig zu diesem verbreitert. Hierbei läßt sich demnach der Zylinderballen 1 freilegen, ohne daß eine Demontage der Lagerzapfen 2 erforderlich ist. Diese sind lediglich vom Zylinderballen 2 zu lösen und so weit nach außen zu schieben, daß der Zentrierkopf 13 außer Eingriff mit der Zentrierbohrung 14 kommt. Da die Lagerzapfen 2 in Stellung bleiben können, entfällt in vorteilhafter Weise auch eine Demontage des das Antriebsrad 2 enthaltenden Räderzugs, der Rollenlager 3 und der Lagerbüchsen 7. Es sind lediglich die Verbindungsschrauben zwischen den Flanschen 12 und dem Zylinderballen 1 und die Halteschrauben der der Stellspindel 10 zugeordneten Gewindebüchse 11 zu lösen.

Die Verschiebung der Lagerzapfen 2 erfolgt zweckmäßig hydraulisch oder pneumatisch. Die den Zentrierkopf 13 aufnehmende Zentrierbohrung 14 bildet praktisch eine Druckkammer 18, die durch den zugeordneten Zentrierkopf 13 kolbenartig verschlossen wird. Diese Druckkammer 18 ist über einen hier als Winkelbohrung ausgebildeten, nach außen geführten Kanal 19 an eine Druckquelle 20 anschließbar. Hierzu ist das radial aus den Lagerzapfen 2 austretende Ende der den Kanal 19 bildenden Winkelbohrung mit einem Gewinde versehen, an das ein mit einem entsprechenden Anschlußnippel versehener, zur Druckquelle 20 führender Anschlußschlauch 21 ansetzbar ist. Als Druckquelle 20 findet im dargestellten Ausführungsbeispiel eine von Hand betätigbare Hydraulikpumpe Verwendung. Ein derartiges Aggregat kann in vorteilhafter Weise überall leicht in Stellung gebracht und leicht transportiert werden, so daß hiermit sämtliche Zapfen nacheinander bedienbar sind.

Die in eine der Druckkammern 18 gedrückte Hydraulikflüssigkeit hebt den jeweils zugeordneten Lagerzapfen 2 von der Ballenstirnseite ab und drängt ihn nach außen, wodurch der Zylinderballen 2 freigegeben wird. Zur Vermeidung einer Verkantung im Bereich der Rollenlager 3 werden die außer Eingriff mit dem Zylinderballen kommenden Lagerzapfen 2 zweckmäßig auf einem am Maschinengehäuse lösbar festlegbaren Auflager 22 abgestützt. Die Auflager 22 sind im dargestellten Ausführungsbeispiel zweckmäßig als den Flansch 12 des jeweils zugeordneten Lagerzapfens 2 im Bereich ihres unteren Umfangs umgreifende Schalen ausgebildet. Die Lagerzapfen 2 werden, wie weiter oben schon erwähnt, zweckmäßig nacheinander abgezogen. Beim Abziehen des der Stellspindel 10 gegenüberliegenden, das Antriebsrad 9 aufnehmenden Zapfens 2 wird dabei die erforderliche Gegenkraft durch die Gewindespindel 10 und die dieser zugeordnete Gewindebüchse 11 auf das Maschinengestell übertragen. Die Halteschrauben der Gewindebüchse 11 sind dabei noch nicht gelöst. Die Zahnbreite des Antriebsrads 9 ist größer als die Höhe des Zentrierzapfens 13, so daß das Antriebsrad 9 mit den benachbarten Zahnrädern im Eingriff bleibt. Es ist lediglich dafür zu sorgen, daß auch bei geschlossenem Radkastendeckel ausreichend Verschiebeweg vorhanden ist. Zum Abziehen des mit der Gewindespindel 10 gekoppelten Lagerzapfens 2 werden die Halteschrauben der Gewindebüchse 11 gelöst. Die erforderliche Gegenkraft wird hierbei zweckmäßig über einen mit der gegenüberliegenden Ballenstirnseite zusammenwirkenden Distanzblock auf das Maschinengehäuse übertragen. Im dargestellten Ausführungsbeispiel sind die Auflager 22 zweckmäßig so weit verlängert, daß sie gleichzeitig als Distanzblock dienen können. Vielfach genügt jedoch bereits die große Masse des Zylinderballens 1 um eine axiale Bewegung des Ballens anstelle des gewünschten Lagerzapfens zu vermeiden.

Der jeweils freigegebene Zylinderballen 1 kann durch ein geeignetes Hebezeug, das beispielsweise an den stirnseitig freigegebenen Zentrierköpfen angreifen kann, abgehoben werden. Im dargestellten Ausführungsbeispiel sind am Maschinengehäuse lösbar festlegbare Ausrollschienen 23 vorgesehen, die das Ein- und Auslegen des Zylinderballens 1 besonders erleichtern. Die Ausrollschienen 23 sind über Traversen 24 an der jeweils benachbarten Maschinenwand befestigbar. Die Gestellseitenwände 4 sind zweckmäßig mit den zum Festlegen der Distanzblöcke bzw. Auflager 22 bzw. der Ausrollschienen 23 benötigten Bohrungen versehen, so daß diese Montagehilfen bei Bedarf leicht und einfach anbringbar sind.

Das beschriebene Ausführungsbeispiel läßt erkennen, daß mit Hilfe der erfindungsgemäßen Maßnahmen ein einfacher Aus- bzw. Wiedereinbau des Zylinderballens 1 ohne gehäuseseitige Demontage der Lagerzapfen 2 gelingt.

## Ansprüche

1. Zylinder für eine mit mehreren, aufeinander abrollenden Arbeitszylindern versehene Maschine, insbesondere Druckwerkszylinder für eine Druckmaschine, mit einem mittleren Ballen (1) und seitlichen in gehäuseseitige axiale Verschiebelager (3) eingreifenden, mit dem Ballen (1) lösbar verbundenen Lagerzapfen (2), von denen vorzugsweise mindestens einer mit einem Antriebsrad (9) versehen ist, dadurch gekennzeichnet, daß die Lagerzapfen (2) mit einem dem Ballen (1) jeweils zugewandten Flansch (12), der an einer jeweils zugeordneten planparallelen Gegenfläche des Ballens (1) zur Anlage bringbar ist, mit dem Ballen (1) lösbar verschraubbar sind, der im Bereich seiner den Lagerzapfen (2) zugewandten Stirnseiten mit jeweils einem kolbenartig ausgebildeten, eine gehärtete Passungsbüchse (15) tragenden Zentrierkopf (13) versehen ist, der mit strammem Schiebesitz zum Eingriff in eine ebenfalls mit einer gehärteten Passungsbüchse (16) bestückte Zentrierbohrung (14) des jeweils zugeordneten Lagerzapfens (2) bringbar ist und in der Eingriffsstellung eine Druckkammer (18) verschließt, die über einen nach außen geführten Kanal (19) an eine Druckquelle anschließbar ist, und daß die den Lagerzapfen (2) zugeordneten Verschiebelager (3) jeweils einen zumindest der axialen Länge des Zentrierkopfes (13) entsprechenden Verschiebeweg aufweisen.

2. Zylinder nach Anspruch 1 bei dem einer der Lagerzapfen mit einer in eine gehäusefeste Gewindebüchse (11) eingreifenden Stellspindel (10) gekoppelt ist, dadurch gekennzeichnet, daß die der Stellspindel (10) zugeordnete Gewindebüchse (11) lösbar am Maschinengehäuse festlegbar ist.

3. Zylinder nach Anspruch 1 oder 2, wobei im Bereich der Ballenstirnseiten Schmitzringe (6) vorgesehen sind, dadurch gekennzeichnet, daß die Schmitzringe (6) als auf den stirnseitigen Umfangsbereich des Ballens (1) aufgezogene Lagerringe ausgebildet sind.

4. Zylinder nach wenigstens einem der vorhergehenden Ansprüche 1 bis 3, dadurch gekennzeichnet, daß den Lagerzapfen (2) vorzugsweise als den unteren Umfangsbereich ihres Flansches (12) jeweils umgreifende Schalen ausgebildete, lösbar am Maschinengehäuse festlegbare Auflager (22) zugeordnet sind.

5. Zylinder nach wenigstens einem der vorhergehenden Ansprüche 1 bis 4, dadurch gekennzeichnet, daß der Ballen (1) mittels eines am Maschinengehäuse lösbar festlegbaren Distanzblocks gegen seitliches Verschieben blockierbar ist.

6. Zylinder nach Anspruch 4 oder 5, dadurch gekennzeichnet, daß das dem Lagerzapfen (2) jeweils zugeordnete Auflager (22) als Distanzblock ausgebildet ist.

7. Zylinder nach wenigstens einem der vorhergehenden Ansprüche 1 bis 6, dadurch gekennzeichnet, daß dem Ballen (1) am Maschinengehäuse lösbar festlegbare Ausrollschienen (23) zugeordnet sind.

8. Zylinder nach wenigstens einem der vorhergehenden Ansprüche 1 bis 7 mit als Rollenlager mit einem rollenführungsfreien Lagerring (17) ausgebildeten Verschiebelagern, dadurch gekennzeichnet, daß der rollenführungsfreie Lagerring (17) zumindest um die axiale Länge des ballenseitigen Zentrierkopfes (13) gegenläufig zu diesem gegenüber dem gegenüberliegenden Lagerring verbreitert ist.

9. Zylinder nach wenigstens einem der vorhergehenden Ansprüche 1 bis 8, dadurch gekennzeichnet, daß der Ballen (1) aus korrosionsbeständigem Material und die Lagerzapfen (2) aus einem eine hohe Tragfähigkeit aufweisenden Material bestehen.

10. Zylinder nach wenigstens einem der vorhergehenden Ansprüche 1 bis 9, dadurch gekennzeichnet, daß als Druckquelle (20) eine vorzugsweise von Hand betätigbare Hydraulikpumpe vorgesehen ist.

**Claims**

1. Cylinders for a machine provided with a plurality of rolling cylinders, in particular printer cylinders for a printing machine, comprising a center barrel (1) and journals (2) laterally engaging the bearings (3) on the housing side, at least one of said journals being preferably provided with a driving wheel (9), characterized in that the journals (2) having a flange (12) which respectively faces towards said barrel (1) and is adapted to be brought into alignment with a respectively associated plane-parallel opposing surface of said barrel (1) are adapted to be releasably screwed to said barrel which, in the region of its end faces directed towards said journals (2), is provided with a centering head (13) respectively supporting a piston-shaped, hardened fit bushing (15), said centering head being adapted to be brought into a close sliding fit engagement in a centering hole (14) of the respectively associated journal (2) which is also equipped with a hardened fit bushing (16) and being adapted to close a pressure chamber (18) in the engagement position, said pressure chamber being adapted to be connected to a pressure source via an external duct (19), and that the bearings (3) associated with said journals (2) are designed as displacement bearings which have a displacement path corresponding at least to the axial length of said centering head (13).

2. The cylinder as set forth in claim 1 in which the journal is coupled with an adjusting spindle engaging a threaded bushing attached to the housing, characterized in that the threaded bushing (11) associated with the adjusting spindle (10) is releasably disposed on the machine housing.

3. The cylinder as set forth in claim 1 or 2, bearer rings being provided adjacent to the barrel end faces, characterized in that said bearer rings (6) are designed as bearing rings mounted on the end-face circumferential region of the barrel (1).

4. The cylinder as set forth in at least one of the preceding claims 1 to 3, characterized in that said journals (2) are preferably associated with supports (22) which are releasably disposed on the machine housing and which are designed as shells respectively encompassing the lower circumferential region of the flange (12) thereof.

5. The cylinder as set forth in at least one of the preceding claims 1 to 4, characterized in that said barrel (1) is adapted to be blocked to prevent lateral displacement by means of a distance block adapted to be releasably disposed on the machine housing.

6. The cylinder as set forth in claim 4 or 5, characterized in that the support (22) respectively associated with the journal (2) is designed as a distance block.

7. The cylinder as set forth in at least one of the preceding claims 1 to 6, characterized in that roll-out rails (23) releasably disposed on said machine housing are associated with said barrel (1).

8. The cylinder as set forth in at least one of the preceding claims 1 to 7, comprising displacement bearings designed as roller bearings with a bearing ring without a roller guide, characterized in that the bearing ring (17) without a roller guide is widened at least by the height of the barrel-side centering head (13) opposite thereto relative to the opposing bearing ring.

9. The cylinder as set forth in at least one of the preceding claims 1 to 8, characterized in that said barrel (1) consists of a corrosion-resistance material and said journals (2) consist of a material which possesses a high load-bearing capacity.

10. The cylinder as set forth in at least one of the preceding claims 1 to 9, characterized in that a preferably manually operated hydraulic pump is provided as said pressure source (20).

**Revendications**

1. Cylindre pour une machine équipée de plusieurs cylindres de travail roulant l'un sur l'autre, notamment cylindre pour machine à imprimer, comportant un tambour central (1) et des tourillons latéraux (2) engagés dans des paliers (3) dont l'un au moins est de préférence muni d'un pignon d'entraînement (9), caractérisé en ce que les tourillons (2) comportent chacun du côté du tambour (1), un flasque (12) qui est appliqué contre une surface plane correspondante du tambour (1) et assemblé avec ce tambour de manière démontable grâce à des boulons, le tambour comportant sur chacune de ses faces frontales, en face des tourillons (2), une tête de centrage (13) en forme de saillie cylindrique, porteuse d'une douille d'ajustement (15) trempée et qui est engagée sans jeu dans un alésage central (14) pourvu également d'une douille d'ajustement (16) trempée du tourillon (2) correspondant de façon à former une chambre de compression (18), laquelle peut être mise en communication avec une source de pression par un canal (19) conduisant à l'extérieur, et en ce que les paliers (3) correspondant aux tourillons (2) sont des paliers coulissants dont la course de coulissement est au moins égale à la longueur axiale de la tête de centrage (13) correspondante.

2. Cylindre selon la revendication 1, dans lequel un des tourillons est relié à une tige de positionnement (10) engagée dans une douille filetée fixée en position, caractérisé en ce que ladite douille filetée (11) est fixée de manière amovible au bâti de la machine.

3. Cylindre selon l'une quelconque des revendications 1 ou 2, équipé de couronnes de pression à proximité des faces frontales du tambour, caractérisé en ce que lesdites couronnes de pression (6) sont agencées en forme de bagues de roulement montées autour des extrémités du tambour (1).

4. Cylindre selon l'une quelconque des revendications 1 à 3, caractérisé en ce que les supports amovibles (22) sont fixés au bâti de la machine au-dessous des tourillons (2), ces supports ayant de préférence la forme d'une coquille entourant la partie inférieure du pourtour du flasque (12) des tourillons.

5. Cylindre selon l'une quelconque des revendications 1 à 4, caractérisé en ce que le déplacement latéral du tambour (1) est bloqué au moyen d'un bloc d'écartement qui est fixé de manière amovible sur le bâti de la machine.

6. Cylindre selon les revendications 4 et 5, caractérisé en ce que le support (22) correspondant à chaque tourillon (2) est agencé pour servir de bloc d'écartement.

7. Cylindre selon l'une quelconque des revendications précédentes, caractérisé en ce que des rails de roulement (23) sont fixés de manière amovible sur le bâti de la machine et sont agencés pour permettre d'y faire rouler le tambour (1).

8. Cylindre selon l'une quelconque des revendications précédentes, comportant des paliers coulissants du type à rouleaux avec une bague de roulement sans guidage, caractérisé en ce que la bague de roulement sans guidage (17) comporte, du côté du tambour, une surlargeur par rapport à la bague de roulement opposée, cette surlargeur étant au moins égale à la hauteur de la tête de centrage (13) du tambour.

9. Cylindre selon l'une quelconque des revendications précédentes, caractérisé en ce que le tambour (1) est réalisé en un matériau résistant à la corrosion et en ce que les tourillons (2) sont réalisés en un matériau à haute résistance mécanique.

10. Cylindre selon l'une quelconque des revendications précédentes, caractérisé en ce que la source de pression (20) est une pompe hydraulique, de préférence à actionnement manuel.